# EUROPÄISCHE PATENTANMELDUNG

(11) **EP 4 372 550 A1**
(43) Veröffentlichungstag der Anmeldung: **22.05.2024**
(21) Anmeldenummer: 22208074.9
(22) Anmeldetag: 17.11.2022
(51) Int. Cl.: G06F 8/656, G06F 8/658, G05B 19/418

(54) **VERFAHREN ZUR REDUKTION DER UNTERBRECHUNGSZEITEN BEI EINEM SOFTWARE-UPDATE EINES FELDGERÄTS**

(71) Anmelder: VEGA Grieshaber KG, 77709 Wolfach (DE)
(72) Erfinder: ISENMANN, Andreas, 77716 Haslach i. K. (DE); SCHÄTZLE, Ralf, 77716 Fischerbach (DE); SCHNAITTER, Michael, 77790 Steinach (DE)
(74) Vertreter: Maiwald GmbH

(57) **Zusammenfassung**

Die Erfindung betrifft ein Verfahren zur Reduktion der Unterbrechungszeit beim Update eines ersten Programmteils (P1) eines Feldgeräts (10) auf ein zweites Programmteil (P2). Das Feldgerät (10) weist einen Speicher (40) auf, der zum Speichern mindestens des ersten Programmteils (P1), des zweiten Programmteils (P2) und eines Basis-Programmteils (P0) eingerichtet ist, wobei der zweite Programmteil (P2) mit dem ersten Programmteil (P1) kompatibel ist, so dass der erste Programmteil (P1) durch den zweiten Programmteil (P2) ersetzbar ist. Das Feldgerät (10) weist weiterhin einen Prozessor (20 und eine Kommunikationseinheit (30) auf. Das Verfahren weist folgende Schritte auf: Übertragen des zweiten Programmteils (P2) in einen zweiten Speicherbereich (42) des Speichers (40); Anhalten des ersten Programmteils (P1); Übertragen, mittels des Prozessors (20), einer Menge von Zustandsvariablen (Va, Vb) von dem ersten Programmteil (P1) auf den zweiten Programmteil (P2); und Starten des zweiten Programmteils (P2).

## Beschreibung

### Gebiet der Erfindung

Die Erfindung betrifft ein Verfahren zur Reduktion der Unterbrechungszeiten beim Update eines Programmteils, insbesondere für ein Feldgerät. Weiterhin betrifft die Erfindung ein Feldgerät, eine Verwendung, ein Programmelement und ein computerlesbares Medium.

### Hintergrund

Feldgeräte, insbesondere Feldgeräte, die Sensoren aufweisen, sind in vielen Fällen dazu eingerichtet, Daten - z.B. von dem Sensor - zu bearbeiten. Wenn ein Update der Software des Feldgeräts durchgeführt wird, so kann es zu Unterbrechungszeiten oder Ausfallzeiten (Downtime) der Software und/oder des Feldgeräts kommen. Es ist daher wünschenswert, diese Unterbrechungszeiten zu reduzieren.

### Zusammenfassung

Es ist Aufgabe der Erfindung, ein Verfahren zur Verfügung zu stellen, das zur Reduktion der Unterbrechungszeiten beim Update eines Programmteils beitragen kann. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren zur Reduktion der Unterbrechungszeit beim Update eines ersten Programmteils eines Feldgeräts auf ein zweites Programmteil. Das Feldgerät weist dabei einen Speicher auf, eingerichtet zum Speichern mindestens des ersten Programmteils in einem ersten Speicherbereich des Speichers, des zweiten Programmteils in einem zweiten Speicherbereich des Speichers, und eines Basis-Programmteils, wobei der zweite Programmteil mit dem ersten Programmteil kompatibel ist, so dass der erste Programmteil durch den zweiten Programmteil ersetzbar ist, einen Prozessor, eingerichtet zum Durchführen mindestens eines Programms, wobei das Programm den ersten Programmteil, den zweiten Programmteil und den Basis-Programmteil umfasst, und eine Kommunikationseinheit, eingerichtet zum Empfangen des zweiten Programmteils. Das Verfahren weist folgende Schritte auf:
Übertragen des zweiten Programmteils in einen zweiten Speicherbereich des Speichers; Anhalten des ersten Programmteils;
Übertragen, mittels des Prozessors, einer Menge von Zustandsvariablen von dem ersten Programmteil auf den zweiten Programmteil; und
Starten des zweiten Programmteils.

Als Unterbrechungszeiten, Ausfallzeiten oder Downtime der Software eines Feldgeräts gelten Zeiten bzw. eine Zeitspanne, in der eine bestimmte Funktion der Software nicht verfügbar ist. Ein Ausfall wenigstens einiger Funktionen - z.B. von Funktionen, die für das Feldgerät als wesentlich betrachtet werden - kann dazu führen, dass die gesamte Software und/oder das gesamte Feldgerät als "ausgefallen" angesehen wird. In zumindest einigen Fällen wird bei einem Update nicht die gesamte Software ausgetauscht, sondern nur Teile der Software und/oder eine bestimmte Funktion oder Softwarekomponente, die einem bestimmten Programmteil entsprechen kann. Die Funktion oder Softwarekomponente kann ein erstes Programmteil sein, das - z.B. als kompilierter Code - in einem ersten Speicherbereich des Speichers des Feldgeräts gespeichert ist. Bei einem Update wird der erste Programmteil bzw. dessen Funktion durch einen zweiten Programmteil ersetzt, beispielsweise um einen Fehler zu beheben und/oder eine Funktionserweiterung zu realisieren.

Das Feldgerät weist dabei einen Speicher auf. Der Speicher kann dabei als flüchtiger Speicher (volatiler Speicher) gestaltet sein, und/oder als nicht-flüchtiger Speicher. Der Speicher kann z.B. als DRAM (Dynamic Random Access Memory), SRAM (Static Random Access Memory), Flash und/oder als eine andere Art von Speicher, oder auch als eine Mischung von verschiedenen Speichertypen realisiert sein. Der Speicher kann den (maschinenlesbaren) Code für ein oder mehrere Programme beinhalten. Das Programm kann den ersten Programmteil, den zweiten Programmteil und den Basis-Programmteil und/oder weitere Programmteile umfassen. Der erste Programmteil, der zweite Programmteil, der Basis-Programmteil und/oder weitere Programmteile können dabei in jeweils getrennten Bereichen des Speichers gespeichert sein. Dabei werden durch das Update der Basis-Programmteil und/oder weitere Programmteile unverändert belassen, d.h. diese Programmteile werden nach dem Update ohne Änderung des Codes weiter verwendet, während die Funktion des ersten Programmteils durch den zweiten Programmteil ersetzt wird. Als Ergebnis des Updates soll also nur die Funktion des ersten Programmteils durch die Funktion des zweiten Programmteils ersetzt worden sein.

Das Feldgerät weist weiterhin einen Prozessor auf, der zum Durchführen mindestens des Programms eingerichtet ist. Der Prozessor kann dabei auf den Speicher und auf weitere Teile des Feldgeräts zugreifen, z.B. auf eine Kommunikationseinheit. Die Kommunikationseinheit kann dabei zum Empfangen des zweiten Programmteils eingerichtet sein, und optional für weitere Funktionen wie z.B. zur Übermittlung weiterer Daten, wie z.B. Messdaten, Parametrierdaten, usw. Das Feldgerät kann, basierend auf dem gleichen Physical Layer, mehrere Kommunikationsprotokolle implementiert haben, beispielsweise Modbus TCB, Profinet, Ethernet-IP, HART-IP oder OPC UA.

Bei dem Verfahren wird dabei vorausgesetzt, dass der zweite Programmteil mit dem ersten Programmteil kompatibel ist, so dass der erste Programmteil durch den zweiten Programmteil ersetzbar ist. Ein Programmteil ist dann mit einem anderen Programmteil kompatibel und/oder ersetzbar, wenn beide Programmteile dieselben Schnittstellen aufweisen (z.B. zur Parameterübergabe) und wenn zumindest eine Teilmenge von Zustandsvariablen der beiden Programmteile gleich ist. Die Auswahl des kompatiblen Programmteils (oder mehrerer kompatiblen Programmteile) kann zum Beispiel durch einen Softwarearchitekten geschehen. Die Gesamtsoftware kann aufgeteilt werden in Teile, die unterbrechungsfrei aktualisiert werden können und andere Teile, die nur mit Inkaufnahme von Unterbrechungszeiten aktualisiert werden können. Die Unterbrechungszeiten können dabei "von außerhalb des Feldgeräts" - d.h. von einem externen Programm, das auf das Feldgerät zugreift - zum Beispiel als Kommunikationsunterbrechung beobachtet werden.

Für das Update wird dabei das zweite Programmteil in einen zweiten Speicherbereich des Speichers übertragen. Das Übertragen kann z.B. mittels der Kommunikationseinheit durchgeführt werden. Das Übertragen kann, alternativ oder zusätzlich, auch (z.B. während der Herstellungsphase im Werk) in den zweiten Speicherbereich kopiert werden, z.B. in einen Flash-Speicher. Dies kann z.B. sinnvoll sein, wenn in dem ersten Speicherbereich ein anderes Auswerteverfahren gespeichert ist als in dem zweiten Speicherbereich und eine Auswahl des Auswerteverfahrens während des Betriebs möglich sein soll.

Nach dem Übertragen des zweiten Programmteils wird der erste Programmteil angehalten, d.h. der erste Programmteil wird nicht mehr ausgeführt und insbesondere die Zustandsvariablen des ersten Programmteils werden nicht mehr verändert. Der Prozessor kann dann eine Menge von Zustandsvariablen - in der Regel eine vordefinierte geordnete Teilmenge der Zustandsvariablen - von dem ersten Programmteil auf den zweiten Programmteil übertragen. Das Übertragen kann z.B. durch Auslesen der relevanten Zustandsvariablen aus einem Speicherbereich oder von einer Schnittstelle des ersten Programmteils erfolgen und entsprechend in einen Speicherbereich oder in eine Schnittstelle des zweiten Programmteils geschrieben werden.

Nach dem Übertragen der Zustandsvariablen kann der zweite Programmteil gestartet werden. Das Starten kann - je nach Softwarearchitektur - z.B. durch Starten eines Teilprozesses und/oder durch Änderung einer Sprungadresse (Branch) realisiert werden.

Durch dieses Verfahren werden die Unterbrechungszeiten beim Update eines Programmteils deutlich reduziert. Denn es muss zum einen nicht mehr abgewartet werden, bis das gesamte Programm ersetzt ist, sondern es genügt, den ersten Programmteil durch den zweiten Programmteil zu ersetzen; dies dauert eine deutlich kürzere Zeitspanne. Außerdem muss während der Zeit, in welcher der zweite Programmteil übertragen wird, das Programm des Feldgeräts nicht angehalten werden. Das Programm kann nur in der - vergleichsweise kurzen - Zeitspanne nicht genutzt werden, in der die Zustandsvariablen übertragen und von dem ersten Programmteil auf den zweiten Programmteil "umgeschaltet" wird. Für zumindest einige Feldgeräte kann diese Zeitspanne so kurz sein, dass das Feldgerät trotz des Updates "von außen" (d.h. von Geräten, die auf das Feldgerät zugreifen) als unterbrechungsfrei betrieben wahrgenommen wird.

In einigen Ausführungsformen weist das Verfahren weiterhin folgenden Schritt auf: Vor dem Übertragen des zweiten Programmteils, starten des ersten Programmteils. Dies kann zum Beispiel eine erste Werkseinstellung - z.B. eines Auswerteverfahrens - realisieren.

In einigen Ausführungsformen wird das Anhalten des ersten Programmteils ausschließlich in einem vordefinierten Zustand des ersten Programmteils durchgeführt. Der vordefinierte Zustand kann z.B. ein Zustand "Idle" (Pause) sein, der z.B. zwischen zwei Messungen eingenommen werden kann. Vorteilhafterweise kann durch die Auswahl eines geeigneten vordefinierten Zustands die "von außen" wahrgenommene Unterbrechungszeit weiter reduziert werden. Dabei kann mehr als ein vordefinierter Zustand sich als besonders geeignet erweisen.

In einigen Ausführungsformen ist das Programm zur Bearbeitung von Nachrichtenpaketen eingerichtet. Das Programm kann sich beispielsweise in einem Zustand "warten auf Interrupt" befinden ("schlafen" oder "warten"); durch Ankunft eines Nachrichtenpakets kann der Zustand geändert werden, d.h. das Programm kann zur Bearbeitung "aufgeweckt" werden. Dies kann sowohl zu einer besonders vorteilhaften Verwendung der Betriebsmittel führen als auch zu einer weiteren Reduktion der "wahrgenommenen" Unterbrechungszeit führen.

In einigen Ausführungsformen beinhaltet das Übertragen der Menge von Zustandsvariablen ein Übertragen von einer ersten Zustandsvariablenschnittstelle des ersten Programmteils zu einer zweiten Zustandsvariablenschnittstelle des zweiten Programmteils. Das Übertragen kann z.B. durch Auslesen der relevanten Zustandsvariablen aus einem Speicherbereich oder von einer Schnittstelle des ersten Programmteils erfolgen und entsprechend in einen Speicherbereich oder in eine Schnittstelle des zweiten Programmteils geschrieben werden. Alternativ oder zusätzlich ist ein Zwischenspeichern in einem weiteren Programmteil, z.B. in einem weiteren Speicherteil oder in einer "Prozess-Pipe" (analog zu Unix), möglich.

In einigen Ausführungsformen leitet der Basis-Programmteil zwischen dem Starten und dem Anhalten des ersten Programmteils zu bearbeitende Daten zu dem ersten Programmteil, und nach dem Starten des zweiten Programmteils leitet der Basis-Programmteil zu bearbeitende Daten zu dem zweiten Programmteil.

In einigen Ausführungsformen weisen die Zustandsvariablenschnittstelle des ersten Programmteils und die Zustandsvariablenschnittstelle des zweiten Programmteils dieselben Zustandsvariablen auf. Dies kann eine erhöhte Kompatibilität definieren und das Update weiter vereinfachen.

Ein Aspekt betrifft ein Feldgerät, das zur Durchführung eines Verfahrens wie oben und/oder nachfolgend beschrieben eingerichtet ist.

In einigen Ausführungsformen ist das Feldgerät als autonomes Feldgerät gestaltet und/oder das Feldgerät weist eine drahtlose Kommunikationseinheit auf. Ein autonomes Feldgerät kann eine eigene Stromversorgung aufweisen, z.B. in Form eines Akkus und/oder einer eigenen Energieversorgung (z.B. Solarzelle). Ein autonomes Feldgerät kann gekapselt sein und/oder anderweitig robust gegen mechanische und/oder chemische Störungen geschützt sein. Ein autonomes Feldgerät kann drahtlose Kommunikationsprotokolle aufweisen. So kann die Kommunikationseinheit beispielsweise Protokolle eines ein Wireless Personal Area Network, eines Wireless LAN und/oder eines Niedrigenergieweitverkehrnetzwerks unterstützen.

Ein Aspekt betrifft eine Verwendung eines Feldgeräts wie oben und/oder nachfolgend beschrieben zur Füllstandmessung, zur Topologiebestimmung, zur Grenzstandbestimmung, zur Durchflussmessung, zur Druckmessung und/oder zur Temperaturmessung. Das Feldgerät kann z.B. einen Impedanzgrenzschalter, ein Vibrationsgrenzschalter, ein Füllstandmessgerät mit einem Radarfrontend, geführtem Radarfrontend, Ultraschallfrontend, LiDAR- oder Laserfrontend oder ein radiometrisches Frontend, und/oder eine Anzeigevorrichtung aufweisen.

Ein Aspekt betrifft ein Programmelement, welches, wenn es auf einem Prozessor eines Feldgeräts ausgeführt wird, den Prozessor anweist, das hier beschriebene Verfahren durchzuführen.

Ein Aspekt betrifft ein computerlesbares Medium, auf dem das hier beschriebene Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig.** 1: schematisch ein Feldgerät gemäß einer Ausführungsform;
- **Fig. 2**: schematisch einen Teil eines Feldgeräts gemäß einer Ausführungsform;
- **Fig. 3**: schematisch einen Teil eines Feldgeräts gemäß einer Ausführungsform;
- **Fig. 4**: ein Flussdiagramm mit einem Verfahren gemäß einer Ausführungsform.

### Detaillierte Beschreibung von Ausführungsformen

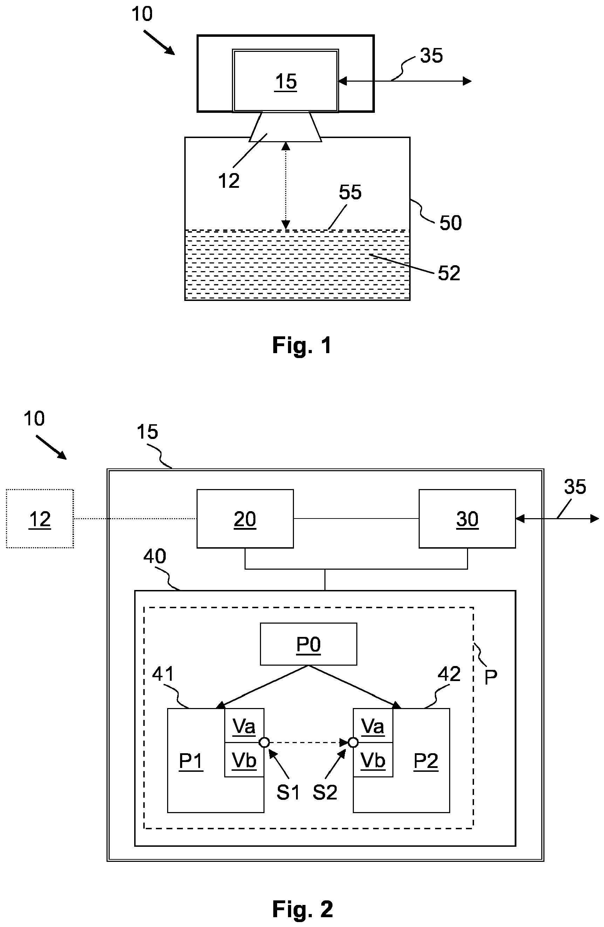

**Fig. 1** zeigt schematisch ein Feldgerät 10 gemäß einer Ausführungsform. Das Feldgerät 10 ist in diesem Ausführungsbeispiel als ein Füllstandmessgerät gezeigt, das ein Radarfrontend 12 aufweist, das zur Bestimmung eines Füllstands 55 eines Mediums 52 in einem Behälter 50 eingerichtet ist. Das Radarfrontend 12 ist symbolisch als Hornantenne dargestellt. Das Radarfrontend 12 ist mit einer Auswerteeinheit 15 verbunden. Das Radarfrontend 12 kann weitere Bauteile aufweisen, wie z.B. einen Oszillator, einen Mischer etc. (nicht dargestellt). Die Auswerteeinheit 15 weist einen Anschluss 35 auf, der z.B. zur Kommunikation mit externen Geräten, zur Energieversorgung und/oder zu weiteren Zwecken dienen kann. Bei zumindest einigen Feldgeräten kann die Kommunikation drahtlos ausgeführt sein. Bei zumindest einigen Feldgeräten kann die Energieversorgung drahtlos und/oder nur mittels interner Mittel (z.B. Solarzelle und/oder Akku) ausgeführt sein. Zumindest einige Feldgeräte können gekapselt sein und somit keinen nach außen führenden "Draht" (etc.) aufweisen.

**Fig. 2** zeigt schematisch einen Teil eines Feldgeräts 10 gemäß einer Ausführungsform. Das Feldgerät 10 weist eine Auswerteeinheit 15 auf, an die ein optionales Radarfrontend 12 angeschlossen ist. Alternativ oder zusätzlich kann ein anderer Typ von Frontend und/oder eine Anzeigeeinheit angeschlossen sein. Die Auswerteeinheit 15 kann einen Prozessor 20 beinhalten. Der Prozessor 20 kann an einen Speicher 40 und/oder an eine Kommunikationseinheit 30 des Feldgeräts 10 angeschlossen sein. Die Kommunikationseinheit 30 weist einen Anschluss 35 auf, der z.B. zur Kommunikation mit externen Geräten, zur Energieversorgung und/oder zu weiteren Zwecken dienen kann. Die Kommunikationseinheit 30 kann eine drahtlose und/oder eine drahtgebundene Verbindung aufweisen.

Der Speicher 40 kann ein oder mehrere Programme P aufweisen. Der Speicher 40 ist eingerichtet zum Speichern mindestens eines ersten Programmteils P1 in einem ersten Speicherbereich 41, eines zweiten Programmteils P2 in einem zweiten Speicherbereich 42 und eines Basis-Programmteils P0. Dabei ist der zweite Programmteil P2 mit dem ersten Programmteil P1 kompatibel, so dass der erste Programmteil P1 durch den zweiten Programmteil P2 ersetzbar ist. Der zweite Programmteil P2 kann z.B. mittels der Kommunikationseinheit 30 und/oder des Prozessors 20 in den zweiten Speicherbereich 42 übertragen werden. Der erste Programmteil P1 weist Zustandsvariablen auf; als Beispiel sind Zustandsvariablen Va und Vb dargestellt. Der erste Programmteil P1 weist weiterhin eine Zustandsvariablenschnittstelle S1 auf. Die Zustandsvariablenschnittstelle S1 ist dabei so gestaltet, dass über diese Schnittstelle die Zustandsvariablen Va und Vb an eine Zustandsvariablenschnittstelle S2 des zweiten Programmteils P2 übertragen werden können. Nachdem die Zustandsvariablen Va und Vb an den zweiten Programmteil P2 übertragen sind, kann der zweite Programmteil P2 gestartet werden und somit das Update wirksam werden.

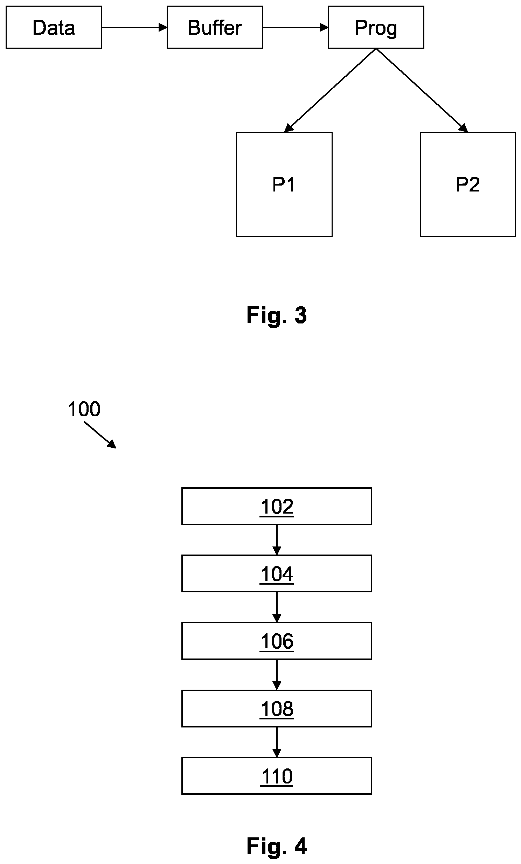

**Fig. 3** zeigt schematisch einen Teil eines Feldgeräts 10 gemäß einer Ausführungsform. Dabei wird ein Datenpaket Data empfangen, z.B. über eine TCP/IP-Schnittstelle, und an einen Puffer "Buffer" geleitet. Die Daten in dem Puffer werden von einem Programm "Prog" bearbeitet bzw. zur Bearbeitung an ein erstes Programmteil P1 geleitet und dort bearbeitet. Nach einem Update, bei dem ein Programmteil P2 in einen Speicher eines Feldgeräts gespeichert wird (siehe z.B. **Fig. 2****),** wird die Bearbeitung von dem Programmteil P2 übernommen. Dazu müssen die Programmteile P1 und P2 kompatibel sein. Es kann festgelegt werden, welche der im Feldgerät implementierten Kommunikationsprotokolle unterbrechungsfrei und welche nur mit einer Unterbrechung aktualisiert werden können.

**Fig. 4** zeigt ein Flussdiagramm 100 mit einem Verfahren gemäß einer Ausführungsform. In einem Schritt 102 wird ein erstes Programmteil P1 (siehe z.B. **Fig. 2****)** gestartet. In einem Schritt 104 wird ein zweites Programmteil P2 in einen zweiten Speicherbereich 42 des Speichers 40 übertragen. In einem Schritt 106 wird der erste Programmteil P1 angehalten. In einem Schritt 106 wird eine Menge von Zustandsvariablen Va, Vb von dem ersten Programmteil P1 auf den zweiten Programmteil P2 übertragen, z.B. über die Schnittstellen S1 und S2. In einem Schritt 110 wird der zweite Programmteil P2, der das Update umfasst, gestartet.

### Liste der Bezugszeichen

- 10: Feldgerät
- 12: Radarfrontend
- 15: Auswerteeinheit
- 20: Prozessor
- 30: Kommunikationseinheit
- 35: Anschluss
- 40: Speicher
- 41: erster Speicherbereich
- 42: zweiter Speicherbereich
- 50: Behälter
- 52: Medium
- 55: Füllstand
- 100: Flussdiagramm
- 102 - 110: Schritte
- P0: Basis-Programmteil
- P1: erster Programmteil
- P2: zweiter Programmteil
- S1, S2: Zustandsvariablenschnittstellen
- V1, V2: Zustandsvariablen

## Patentansprüche

1. Verfahren zur Reduktion der Unterbrechungszeit beim Update eines ersten Programmteils (P1) eines Feldgeräts (10) auf ein zweites Programmteil (P2), das Feldgerät (10) aufweisend:
einen Speicher (40), eingerichtet zum Speichern mindestens des ersten Programmteils (P1) in einem ersten Speicherbereich (41) des Speichers (40), des zweiten Programmteils (P2) in einem zweiten Speicherbereich (42) des Speichers (40), und eines Basis-Programmteils (P0), wobei der zweite Programmteil (P2) mit dem ersten Programmteil (P1) kompatibel ist, so dass der erste Programmteil (P1) durch den zweiten Programmteil (P2) ersetzbar ist,
einen Prozessor (20), eingerichtet zum Durchführen mindestens eines Programms (P), wobei das Programm (P) den ersten Programmteil (P1), den zweiten Programmteil (P2) und den Basis-Programmteil (P0) umfasst, und
eine Kommunikationseinheit (30), eingerichtet zum Empfangen des zweiten Programmteils (P2),
das Verfahren aufweisend die Schritte:
übertragen des zweiten Programmteils (P2) in einen zweiten Speicherbereich (42) des Speichers (40);
anhalten des ersten Programmteils (P1);
übertragen, mittels des Prozessors (20), einer Menge von Zustandsvariablen (Va, Vb) von dem ersten Programmteil (P1) auf den zweiten Programmteil (P2); und
starten des zweiten Programmteils (P2).

2. Verfahren nach Anspruch 1, weiter aufweisend den Schritt:
vor dem Übertragen des zweiten Programmteils (P2), starten des ersten Programmteils (P1).

3. Verfahren nach einem der vorhergehenden Ansprüche,
wobei das Anhalten des ersten Programmteils (P1) ausschließlich in einem vordefinierten Zustand des ersten Programmteils (P1) durchgeführt wird.

4. Verfahren nach einem der vorhergehenden Ansprüche,
wobei das Programm (P) zur Bearbeitung von Nachrichtenpaketen eingerichtet ist.

5. Verfahren nach einem der vorhergehenden Ansprüche,
wobei das Übertragen der Menge von Zustandsvariablen (Va, Vb) ein Übertragen von einer ersten Zustandsvariablenschnittstelle (S1) des ersten Programmteils (P1) zu einer zweiten Zustandsvariablenschnittstelle (S2) des zweiten Programmteils (P2) beinhaltet.

6. Verfahren nach einem der vorhergehenden Ansprüche,
wobei der Basis-Programmteil (P0) zwischen dem Starten und dem Anhalten des ersten Programmteils (P1) zu bearbeitende Daten zu dem ersten Programmteil (P1) leitet, und nach dem Starten des zweiten Programmteils (P2) zu dem zweiten Programmteil (P2) leitet.

7. Verfahren nach einem der vorhergehenden Ansprüche,
wobei die Zustandsvariablenschnittstelle (S1) des ersten Programmteils (P1) und die Zustandsvariablenschnittstelle (S2) des zweiten Programmteils (P2) dieselben Zustandsvariablen (Va, Vb) aufweisen.

8. Feldgerät (10), das zur Durchführung eines Verfahrens nach einem der vorhergehenden Ansprüche eingerichtet ist.

9. Feldgerät (10) nach Anspruch 8, das als autonomes Feldgerät gestaltet ist und/oder eine drahtlose Kommunikationseinheit (30) aufweist.

10. Verwendung eines Feldgeräts (10) nach Anspruch 8 oder 9 zur Füllstandmessung, zur Topologiebestimmung, zur Grenzstandbestimmung, zur Durchflussmessung, zur Druckmessung und/oder zur Temperaturmessung.

11. Programmelement, welches, wenn es auf einem Prozessor (20) eines Feldgeräts (10) ausgeführt wird, den Prozessor (20) anweist, das Verfahren nach einem der Ansprüche 1 - 7 durchzuführen.

12. Computerlesbares Medium, auf dem ein Programmelement nach dem vorhergehenden Anspruch gespeichert ist.

## Geänderte Patentansprüche

### Geänderte Patentansprüche gemäss Regel 137(2) EPÜ.

1. Verfahren zur Reduktion der Unterbrechungszeit beim Update eines ersten Programmteils (P1) eines Feldgeräts (10) auf ein zweites Programmteil (P2), das Feldgerät (10) aufweisend:
einen Speicher (40), eingerichtet zum Speichern mindestens des ersten Programmteils (P1) in einem ersten Speicherbereich (41) des Speichers (40), des zweiten Programmteils (P2) in einem zweiten Speicherbereich (42) des Speichers (40), und eines Basis-Programmteils (P0), wobei der zweite Programmteil (P2) mit dem ersten Programmteil (P1) kompatibel ist, so dass der erste Programmteil (P1) durch den zweiten Programmteil (P2) ersetzbar ist,
einen Prozessor (20), eingerichtet zum Durchführen mindestens eines Programms (P), wobei das Programm (P) den ersten Programmteil (P1), den zweiten Programmteil (P2) und den Basis-Programmteil (P0) umfasst, und
eine Kommunikationseinheit (30), eingerichtet zum Empfangen des zweiten Programmteils (P2),
das Verfahren aufweisend die Schritte:
übertragen des zweiten Programmteils (P2) in einen zweiten Speicherbereich (42) des Speichers (40);
anhalten des ersten Programmteils (P1), wobei das Anhalten des ersten Programmteils (P1) ausschließlich in einem vordefinierten Zustand des ersten Programmteils (P1) durchgeführt wird;
übertragen, mittels des Prozessors (20), einer Menge von Zustandsvariablen (Va, Vb) von dem ersten Programmteil (P1) auf den zweiten Programmteil (P2); und
starten des zweiten Programmteils (P2).

2. Verfahren nach Anspruch 1, weiter aufweisend den Schritt:
vor dem Übertragen des zweiten Programmteils (P2), starten des ersten Programmteils (P1).

3. Verfahren nach einem der vorhergehenden Ansprüche,
wobei das Programm (P) zur Bearbeitung von Nachrichtenpaketen eingerichtet ist.

4. Verfahren nach einem der vorhergehenden Ansprüche,
wobei das Übertragen der Menge von Zustandsvariablen (Va, Vb) ein Übertragen von einer ersten Zustandsvariablenschnittstelle (S1) des ersten Programmteils (P1) zu einer zweiten Zustandsvariablenschnittstelle (S2) des zweiten Programmteils (P2) beinhaltet.

5. Verfahren nach einem der vorhergehenden Ansprüche,
wobei der Basis-Programmteil (P0) zwischen dem Starten und dem Anhalten des ersten Programmteils (P1) zu bearbeitende Daten zu dem ersten Programmteil (P1) leitet, und nach dem Starten des zweiten Programmteils (P2) zu dem zweiten Programmteil (P2) leitet.

6. Verfahren nach Anspruch 4,
wobei die Zustandsvariablenschnittstelle (S1) des ersten Programmteils (P1) und die Zustandsvariablenschnittstelle (S2) des zweiten Programmteils (P2) dieselben Zustandsvariablen (Va, Vb) aufweisen.

7. Feldgerät (10), das zur Durchführung eines Verfahrens nach einem der vorhergehenden Ansprüche eingerichtet ist.

8. Feldgerät (10) nach Anspruch 7, das als autonomes Feldgerät gestaltet ist und/oder eine drahtlose Kommunikationseinheit (30) aufweist.

9. Verwendung eines Feldgeräts (10) nach Anspruch 7 oder 8 zur Füllstandmessung, zur Topologiebestimmung, zur Grenzstandbestimmung, zur Durchflussmessung, zur Druckmessung und/oder zur Temperaturmessung.

10. Programmelement, welches, wenn es auf einem Prozessor (20) eines Feldgeräts (10) ausgeführt wird, den Prozessor (20) anweist, das Verfahren nach einem der Ansprüche 1 -6 durchzuführen.

11. Computerlesbares Medium, auf dem ein Programmelement nach dem vorhergehenden Anspruch gespeichert ist.
